# EUROPEAN PATENT APPLICATION

(11) **EP 4 692 008 A1**
(43) Date of publication of application: **11.02.2026**
(21) Application number: 25191586.4
(22) Date of filing: 24.07.2025
(51) Int. Cl.: C03C 3/12, C03C 3/17, C03C 3/247

(54) **OPTICAL GLASS, OPTICAL ELEMENT, AND OPTICAL INSTRUMENT**

(30) Priority: 08.08.2024 CN 202411083668; 13.02.2025 CN 202510159639
(71) Applicant: CDGM Glass Co. Ltd., Chengdu, Sichuan 610100 (CN)
(72) Inventor: WU, Xuyi, Chengdu, 610100 (CN); KUANG, Bo, Chengdu, 610100 (CN); HAO, Liangzhen, Chengdu, 610100 (CN); MAO, Lulu, Chengdu, 610100 (CN)
(74) Representative: Murgitroyd & Company

(57) **Abstract**

The present application relates to an optical glass with a refractive index ranging from 1.46 to 1.52, and an Abbe number ranging from 81 to 89, which exhibits excellent performance for molding large-aperture glass, and outstanding thermal stability suitable for press molding for large-aperture glass. The optical glass includes following components by mole percentage: cationic components including: P⁵⁺: 7% to 27%; Al³⁺: 10% to 45%; Ba²⁺: 5% to 25%; Sr²⁺: 5% to 25%; Ca²⁺: 5% to 30%, and anionic components including: F⁻: 50% to 90%, and O²⁻: 10% to 50%. By appropriately designing the content of each component, the optical glass of the present application not only possesses superior optical performance, but also exhibits excellent performance for molding large-aperture glass, and outstanding thermal stability suitable for press molding large-aperture glass.

## Description

### TECHNICAL FIELD

The present application relates to an optical glass, particularly to an optical glass with a refractive index ranging from 1.46 to 1.52 and an Abbe number ranging from 81 to 89.

### BACKGROUND

Fluorophosphate optical glass, as a widely used novel glass material, has the characteristics of low dispersion and low refractive index, and can eliminate special dispersion of secondary spectra from optical systems, thereby improving the resolution and significantly enhancing the image quality of the optical systems. In the prior art, the fluorophosphate optical glass with a refractive index ranging from 1.46 to 1.52 and an Abbe number ranging from 81 to 89 have been primarily applied to small-aperture optical systems. Consequently, researchers have mainly focused on the forming and precision molding performance of small-aperture fluorophosphate glass.

In recent years, with the rapid development of large-aperture precision optical instruments, there has been a growing demand for large-aperture, high optical-homogeneity fluorophosphate glass. However, in the prior art, the fluorophosphate glass with a refractive index ranging from 1.46 to 1.52 and an Abbe number ranging from 81 to 89 is prone to developing striae inside the glass during the forming process of the large-aperture glass (the thickness is greater than 20 mm), which leads to poor image quality of the resulting optical elements. Additionally, this type of glass has poor thermal stability, making it difficult to realize precision molding of large-aperture glass. The above issues limit its use in large-aperture precision optical instruments.

### SUMMARY

In view of the above, the technical issue to be addressed by the present application is to provide an optical glass with a refractive index ranging from 1.46 to 1.52, and an Abbe number ranging from 81 to 89, which exhibits excellent performance for molding large-aperture glass, and outstanding thermal stability suitable for press molding for large-aperture glass.

The technical solutions adopted to address the technical issue in the present application are as follows:
(1) An optical glass includes the following components by mole percentage: cationic components including: P⁵⁺: 7% to 27%; Al³⁺: 10% to 45%; Ba²⁺: 5% to 25%; Sr²⁺: 5% to 25%; Ca²⁺: 5% to 30%; and
   anionic components including: F⁻: 50% to 90%, and O²⁻: 10% to 50%.
(2) In the optical glass according to (1), by mole percentage, the cationic components further include: Mg²⁺: 0 to 15%, and/or Y³⁺: 0 to 10%, and/or La³⁺: 0 to 10%, and/or Gd³⁺: 0 to 10%, and/or R⁺: 0 to 10%, and/or Sb³⁺: 0 to 1%, wherein R⁺ is one or more selected from the group consisting of Li⁺, Na⁺, and K⁺.
(3) In the optical glass according to (1), by mole percentage, the anionic components further include: Cl⁻: 0 to 1%.
(4) An optical glass consists of cationic components and anionic components, wherein, by mole percentage, the cationic components consist of: P⁵⁺: 7% to 27%; Al³⁺: 10% to 45%; Ba²⁺: 5% to 25%; Sr²⁺: 5% to 25%; Ca²⁺: 5% to 30%; Mg²⁺: 0 to 15%; Y³⁺: 0 to 10%; La³⁺: 0 to 10%; Gd³⁺: 0 to 10%; R⁺: 0 to 10%; and Sb³⁺: 0 to 1%, wherein R⁺ is one or more selected from the group consisting of Li⁺, Na⁺, and K⁺; and the anionic components consist of: F⁻: 50% to 90%, O²⁻: 10% to 50%, and Cl⁻: 0 to 1%.
(5) In the optical glass according to any one of (1) to (4), by mole percentage, the components satisfy one or more of following four conditions:
   1) (Ba²⁺+Sr²⁺+Ca²⁺)/Ba²⁺ is in a range from 2.0 to 4.6, preferably from 2.5 to 4.1, and more preferably from 3.0 to 3.9;
   2) (45%-Al³⁺)/(15%-Mg²⁺) is in a range from 0.3 to 5.0, preferably from 0.4 to 4.0, more preferably from 0.5 to 3.0, and further more preferably from 0.6 to 2.0;
   3) (Al³⁺+Mg²⁺)/Ba²⁺ is in a range from 1.5 to 3.5, preferably from 2.0 to 3.0, and more preferably from 2.3 to 2.7; and
   4) (45%-Al³⁺)/(Gd³⁺+Y³⁺+La³⁺+Li⁺) is in a range from 2.0 to 80.0, preferably from 6.0 to 50.0, and more preferably from 8.0 to 35.0.
(6) In the optical glass according to any one of (1) to (4), by mole percentage, the components satisfy: Mg²⁺/Al³⁺ is in a range from 0 to 0.5, preferably from 0 to 0.3, and more preferably from 0 to 0.1, and/or (Al³⁺-Mg²⁺-Li⁺)/P⁵⁺ is in a range from 0.5 to 2.5, preferably from 1.0 to 2.3, and more preferably from 1.3 to 2.1.
(7) In the optical glass according to any one of (1) to (4), by mole percentage, the components includes: P⁵⁺: 11% to 24%, preferably 15% to 20%; and/or Al³⁺: 18% to 40%, preferably 24% to 35%; and/or Ba²⁺: 9% to 21%, preferably 12% to 19%; and/or Sr²⁺: 8% to 21%, preferably 11% to 17%; and/or Ca²⁺: 10% to 25%, preferably 15% to 20%; and/or Mg²⁺: 0 to 10%, preferably 0 to 5%; and/or Y³⁺: 0 to 5%, preferably 0 to 3%; and/or La³⁺: 0 to 5%, preferably 0 to 2%; and/or Gd³⁺: 0 to 5%, preferably 0 to 3%; and/or R⁺: 0 to 6%, preferably 0 to 3%, more preferably 0; and/or Sb³⁺: 0 to 0.5%, preferably 0 to 0.3%; wherein R⁺ is one or more selected from the group consisting of Li⁺, Na⁺, and K⁺.
(8) In the optical glass according to any one of (1) to (4), by mole percentage, the components include: F⁻: 60% to 80%, preferably 67% to 75%; and/or O²⁻: 20% to 40%, preferably 25% to 33%; and/or Cl⁻: 0 to 0.5%, preferably 0 to 0.3%.
(9) The optical glass according to any one of (1) to (4) has a refractive index n_{d} being in a range from 1.46 to 1.52, preferably from 1.47 to 1.51, more preferably from 1.48 to 1.50, and/or an Abbe number ν_{d} being in a range from 81 to 89, preferably from 83 to 88, and more preferably from 84 to 87.
(10) In the optical glass according to any one of (1) to (4), λ₈₀ of the optical glass is less than or equal to 340 nm, preferably less than or equal to 335 nm, and further preferably less than or equal to 330 nm, more preferably less than or equal to 325 nm, and further more preferably less than or equal to 320 nm; and/or λ₅ of the optical glass is less than or equal to 265 nm, preferably less than or equal to 260 nm, and further preferably less than or equal to 255 nm, more preferably less than or equal to 250 nm, and further more preferably less than or equal to 245 nm; and/or a density ρ of the optical glass is 3.90 g/cm³ or less, preferably 3.82 g/cm³ or less, further preferably 3.78 g/cm³ or less, and more preferably 3.74 g/cm³ or less; and/or a transition temperature T_{g} of the optical glass is 500 °C or less, preferably 490 °C or less, and further preferably 480 °C or less; and/or an acid resistance RA of the optical glass is class 3 or higher, and preferably class 2 or higher; and/or a humidity resistance RC of the optical glass is class 2 or higher, and preferably class 1; and/or a striae quality of the optical glass is grade C or higher, preferably grade B or higher, and more preferably grade A; and/or a crystallization resistance of the optical glass is grade D or higher, preferably grade C or higher, further preferably grade B or higher, and more preferably grade A.
(11) A glass preform is provided, which is made of the optical glass according to any one of (1) to (10).
(12) An optical element is provided, which is made of the optical glass according to any one of (1) to (10) or made from the glass preform according to (11).
(13) An optical instrument is provided, which includes the optical glass according to any one of (1) to (10) and/or the optical element according to (12).

The present application has the following beneficial effects: By appropriately designing the content of each component, the optical glass of the present application not only possesses superior optical performance, but also exhibits excellent performance on forming large-aperture glass, and outstanding thermal stability suitable for press molding for large-aperture glass.

### DETAILED DESCRIPTION

The embodiments of the optical glass of the present application will be described in detail. However, the following embodiments are not intended to limit the present application and can be appropriately modified within the scope of the present application. Additionally, repetitive descriptions may be omitted where appropriate, but such omissions do not limit the essence of the present application. In the following description, the optical glass of the present application may sometimes be simply referred to as "glass".

### Optical Glass

The ranges of contents of components in the optical glass of the present application will be described below. In this specification, unless otherwise specified, a content of a cationic component is expressed as a mole percentage (mol%) of the cation relative to the total cationic components, and a content of an anionic component is expressed as a mole percentage (mol%) of the anion relative to the total anionic components. A ratio between the contents of cationic components refer to the ratios of their mole percentages.

Unless explicitly stated otherwise in specific cases, the numerical ranges listed herein include the upper and lower limits. Terms such as "above" and "below" include the endpoint values, as well as all integers and fractions within the range, and are not limited to the specific values listed when defining the range. The term "and/or" used herein is inclusive; for example, "A and/or B" means A alone, B alone, or both A and B.

It should be noted that the valences of ionic components described below are representative values used for convenience and are not distinguished from other possible valences. The ionic components in the optical glass may have valences different from the representative values. For example, phosphorus (P) with an oxidation state of +5 typically exists in the glass, and therefore "P⁵⁺" is used as the representative value in this disclosure. However, P with other oxidation states may exist in the glass, which is also within the protection scope of the present application.

### Cationic Components

P⁵⁺ is a component of the optical glass of the present application, which can inhibit devitrification of the glass and suppress density increase of the glass. When its content is less than 7%, the devitrification resistance of the glass decreases and the density of the glass increases. When its content exceeds 27%, the Abbe number of the glass decreases and the cost rises. Therefore, the content of P⁵⁺ in the present application is in a range from 7% to 27%, preferably 11% to 24%, and more preferably 15% to 20%.

Al³⁺ can improve the stability of the glass, effectively enhance the processibility and chemical stability of the glass, and increase the viscosity of the glass during the molding process. When the content of Al³⁺ is less than 10%, a stable glass network cannot be formed, and the aforementioned effects cannot be achieved. When the content of Al³⁺ exceeds 45%, the transition temperature and liquidus temperature of the glass increase, which makes melting difficult and increases the molding temperature. As a result, volatilization of the glass is intensified, worsening striae quality, which is unfavorable for the molding of the large-aperture glass. Moreover, an excessively high transition temperature may complicate press molding. Consequently, the content of Al³⁺ in the present application is in a range from 10% to 45%, preferably from 18% to 40%, and more preferably from 24% to 35%.

Ba²⁺ can enhance the refractive index, thermal stability, and weather resistance of the glass. However, excessive Ba²⁺ leads to an increased glass density, inferior abrasion hardness, and a reduced viscosity, worsening striae quality during molding of the glass and making it difficult to obtain high-quality large-aperture optical glass. Therefore, the content of Ba²⁺ in the present application is in a range from 5% to 25%, preferably from 9% to 21%, and more preferably from 12% to 19%.

Sr²⁺ can reduce the thermal expansion coefficient of the glass, effectively adjust the refractive index and density of the glass, and increase the viscosity of the glass, thereby alleviating the formation of striae. However, when the content of Sr²⁺ is too high, the devitrification resistance and chemical stability of the glass decrease. Therefore, the content of Sr²⁺ in the present application is in a range from 5% to 25%, preferably from 8% to 21%, and more preferably from 11% to 17%.

Ca²⁺ can increase the viscosity of the glass, and alleviate the formation of striae, while enhancing the chemical stability of the glass and improving the grindability of the glass. However, excessive Ca²⁺ makes the glass difficult to meet the design requirements for the refractive index and may deteriorate the devitrification resistance. Therefore, the content of Ca²⁺ in the present application is in a range from 5% to 30%, preferably from 10% to 25%, and more preferably from 15% to 20%.

Through extensive research, the inventors have found that in some embodiments, controlling the ratio of (Ba²⁺+Sr²⁺+Ca²⁺)/Ba²⁺ to be equal to or greater than 2.0 can effectively regulate the viscosity of the glass melt during molding, and enhance glass stability, thereby obtaining large-aperture optical glass with good striae quality. However, when (Ba²⁺+Sr²⁺+Ca²⁺)/Ba²⁺ exceeds 4.6, the devitrification resistance of the glass sharply declines, making molding difficult. Therefore, (Ba²⁺+Sr²⁺+Ca²⁺)/Ba²⁺ is preferably in a range from 2.0 to 4.6, more preferably from 2.5 to 4.1, and further preferably from 3.0 to 3.9.

Mg²⁺ can improve the abrasion hardness of the glass, increase the viscosity of the glass, and alleviate the formation of striae. However, when the content of Mg²⁺ exceeds 15%, the thermal stability of the glass significantly decreases. Therefore, the content of Mg²⁺ in the present application is in a range from 0 to 15%, preferably from 0 to 10%, and more preferably from 0 to 5%.

In some embodiments, controlling the ratio between contents of Mg²⁺ and Al³⁺, i.e., Mg²⁺/Al³⁺, to be equal to or less than 0.5 can improve the crystallization resistance of the glass, ensuring excellent production performance of the glass. Therefore, Mg²⁺/Al³⁺ is preferably in a range from 0 to 0.5, more preferably from 0 to 0.3, and further preferably from 0 to 0.1.

Through extensive experimental studies, the inventors have discovered that in some embodiments, by controlling the ratio of the difference between the maximum Al³⁺ content (45%) and the actual Al³⁺ content (45%-Al³⁺) to the difference between the maximum Mg²⁺ content (15%) and the actual Mg²⁺ content (15%-Mg²⁺), i.e., (45%-Al³⁺)/(15%-Mg²⁺), the thermal stability (crystallization resistance) of the glass during reheating can be effectively regulated. When (45%-Al³⁺)/(15%-Mg²⁺) is equal to or less than 5.0, the thermal stability of the glass can be significantly improved, enabling stable press molding for large-aperture glass. However, when (45%-Al³⁺)/(15%-Mg²⁺) is less than 0.3, the crystallization resistance can deteriorate and the liquidus temperature can rise, increasing production difficulty of the glass. Therefore, (45%-Al³⁺)/(15%-Mg²⁺) is in a range from 0.3 to 5.0, more preferably from 0.4 to 4.0, further preferably from 0.5 to 3.0, and even more preferably from 0.6 to 2.0.

Al³⁺ and Mg²⁺ contribute to forming a network and increasing the viscosity of fluorophosphate glass melt, but they also lead to an increase in the liquidus temperature of the glass. Ba²⁺ can adjust the viscosity of the glass while improving the devitrification resistance of the glass melt. Therefore, in some embodiments, when the ratio of (Al³⁺+Mg²⁺) to Ba²⁺, i.e., (Al³⁺+Mg²⁺)/Ba²⁺ is equal to or less than 3.5, the fluorophosphate glass with suitable viscosity and good devitrification resistance can be obtained. When (Al³⁺+Mg²⁺)/Ba²⁺ is less than 1.5, the viscosity of the glass melt becomes too low, narrowing the molding range and worsening the striae, which is unfavorable for molding the large-aperture glass. Thus, (Al³⁺+Mg²⁺)/Ba²⁺ is preferably from 1.5 to 3.5, more preferably from 2.0 to 3.0, and further preferably from 2.3 to 2.7.

Y³⁺ can increase the refractive index of the glass and reduce the thermal expansion coefficient of the glass. However, when the content of Y³⁺ exceeds 10%, the liquidus temperature of the glass rises, the devitrification resistance of the glass decreases, and the working range shortens, making it difficult to control the molding of the large-aperture glass. Therefore, the content of Y³⁺ is in a range from 0 to 10%, preferably from 0 to 5%, and more preferably from 0 to 3%.

La³⁺ can increase the refractive index of the glass and improve acid resistance of the glass. However, excessive La³⁺ can reduce the thermal stability and devitrification resistance of the glass, making the glass prone to devitrification during manufacturing. Thus, in the present application, the content of La³⁺ is in a range from 0 to 10%, preferably from 0 to 5%, and more preferably from 0 to 2%.

Gd³⁺ can improve the stability of the glass and moderately increase the refractive index while maintaining low dispersion of the glass. Additionally, Gd³⁺ can enhance mechanical strength and reduce the thermal expansion coefficient of the glass. However, when the content of Gd³⁺ exceeds 10%, the devitrification resistance of the glass decreases. Therefore, the content of Gd³⁺ is in a range from 0 to 10%, preferably from 0 to 5%, and more preferably from 0 to 3%.

R⁺ can effectively lower the transition temperature of the glass, where R⁺ is one or more of Li⁺, Na⁺, and K⁺. However, when the content of R⁺ exceeds 10%, the liquidus temperature of the glass increases and the viscosity of the glass reduces, which makes molding difficult. Thus, the content of R⁺ is in a range from 0 to 10%, preferably from 0 to 6%, and more preferably from 0 to 3%, and in some embodiments, further preferably, is zero.

Through extensive experimental studies, it has been found that in some embodiments, when the ratio of the difference between the maximum Al³⁺ content (45%) and the actual Al³⁺ content (45%-Al³⁺) to the total content of easily crystallizable components Gd³⁺, Y³⁺, La³⁺, and Li⁺, i.e., (45%-Al³⁺)/(Gd³⁺+Y³⁺+La³⁺+Li⁺) exceeds 2.0, the glass with low crystallization tendency and good striae quality can be easily obtained. However, when (45%-Al³⁺)/(Gd³⁺+Y³⁺+La³⁺+Li⁺) exceeds 80.0, the coloration of the glass increases, the striae quality deteriorates, and the molding becomes difficult. Therefore, (45%-Al³⁺)/(Gd³⁺+Y³⁺+La³⁺+Li⁺) is preferably from 2.0 to 80.0, more preferably from 6.0 to 50.0, and further preferably from 8.0 to 35.0.

In some embodiments, by controlling the ratio of the difference between the Al³⁺ content and the total content of Mg²⁺ and Li⁺ (Al³⁺-Mg²⁺-Li⁺) to the P⁵⁺ content, i.e., (Al³⁺-Mg²⁺-Li⁺)/P⁵⁺ to be in a range from 0.5 to 2.5, the crystallization resistance of the glass can be improved while achieving desired optical performance. Therefore, (Al³⁺-Mg²⁺-Li⁺)/P⁵⁺ is preferably from 0.5 to 2.5, more preferably from 1.0 to 2.3, and further preferably from 1.3 to 2.1.

In the optical glass of the present application, Sb³⁺ with at a content of equal to or less than 1% can be included as a clarifying agent to improve the clarification effect. The content of Sb³⁺ is preferably in a range from 0 to 0.5%, and more preferably from 0 to 0.3%.

Without impairing the excellent performance of the glass of the present application, other components such as Ta⁵⁺, W⁶⁺, Ge⁴⁺, Bi³⁺, Te⁴⁺, etc., can be included in the optical glass of the present application as needed.

### Anionic Components

F⁻ plays a significant role in reducing the refractive index of the glass, decreasing the temperature coefficient of the refractive index, and lowering the transition temperature of the glass, making it an essential component for increasing the Abbe number and anomalous dispersion. However, excessive F⁻ content can weaken the stability of the glass, and increase the thermal expansion coefficient and abrasion hardness of the glass. Especially during melting, the volatilization of F⁻ not only pollutes the environment but also causes optical constants to deviate from the designed range. When the F⁻ content is below 50%, achieving the target Abbe number and anomalous dispersion becomes difficult. Conversely, when the F⁻ content exceeds 90%, the Abbe number of the glass becomes excessively high, and the volatilization drastically increases during melting and precision molding. Therefore, the F⁻ content is in a range from 50% to 90%, preferably from 60% to 80%, and more preferably from 67% to 75%.

The optical glass of the present application contains O²⁻. When the O²⁻ content is equal to or greater than 10%, excellent optical performance and abrasion hardness can be obtained. However, when the O²⁻ content exceeds 50%, the liquidus temperature of the glass rises rapidly. Therefore, the O²⁻ content is in a range from 10% to 50%, preferably from 20% to 40%, and more preferably from 25% to 33%.

In the optical glass of the present application, Cl⁻ with a content equal to or less than 1% can be included as a clarifying agent to improve the clarification effect of the glass. The Cl⁻ content is preferably in a range from 0 to 0.5%, and more preferably in a range from 0 to 0.3%.

### Components to be Excluded

Without impairing the excellent performance of the glass of the present applicant, other components not mentioned above can be added as needed. However, transition metal components such as Ce, V, Cr, Mn, Fe, Co, Ni, Cu, Ag, Mo, etc., even in small amounts, individually or in combination, can color the glass and cause absorption at specific wavelengths in the visible spectrum, thereby diminishing the visible-light transmittance of the glass of the present application. Therefore, especially for optical glass having transmittance requirements for wavelengths in the visible spectrum, it is preferable to substantially exclude these components.

Cations of Pb, Th, Cd, Tl, Os, Be, and Se have recently been subject to controlled use as harmful chemical substances. Measures for environmental protection are necessary not only during glass manufacturing but also in processing and disposal of the final product. Thus, where environmental impact is a concern, it is preferable to substantially exclude these elements, except for inevitable incorporation. Consequently, the optical glass is substantially free of environmentally harmful substances, and thus can be manufactured, processed, and disposed without special environmental countermeasures.

The terms "absent" or "0%" as used herein mean that the component is not intentionally added as a raw material to the optical glass of the present application. However, due to the raw materials and/or equipment used in the production of the optical glass, trace impurities or components may unintentionally enter the optical glass, and the glass in such incidental situation shall fall within the scope of the present application.

The performance of the optical glass of the present application will be described below.

### Refractive index and Abbe number

The refractive index (n_{d}) and Abbe number (ν_{d}) of the optical glass are measured according to the method specified in GB/T 7962.1-2010.

In some embodiments, the refractive index (n_{d}) of the optical glass of the present application is in a range from 1.46 to 1.52, preferably from 1.47 to 1.51, and more preferably from 1.48 to 1.50.

In some embodiments, the Abbe number (ν_{d}) of the optical glass of the present application is in a range from 81 to 89, preferably from 83 to 88, and more preferably from 84 to 87.

### Coloration

The short-wavelength transmittance of the optical glass of the present application is characterized by coloration (λ₈₀/λ₅). λ₈₀ refers to the wavelength of light to which the transmittance of the glass reaches 80%, and λ₅ refers to the wavelength of light to which the transmittance of the glass reaches 5%. The measurement of λ₈₀ is conducted using a glass sample with a thickness of 10±0.1 mm, having two parallel and optically polished opposing surfaces, by measuring the spectral transmittance in the wavelength range from 280 nm to 700 nm, and determining the wavelength at which the transmittance reaches 80%. The term "spectral transmittance" or "transmittance" refers to a ratio represented by Iₒᵤₜ/Iᵢₙ, where Iᵢₙ is the intensity of light incident perpendicularly to the surface of the glass, and Iₒᵤₜ is the intensity of light transmitted through the glass and emitted from the opposite surface, including the transmittance loss due to surface reflection on the glass surfaces. In the glass of the present application, a smaller λ₈₀ value indicates minimal coloration of the glass itself. The same applies to λ₅.

In some embodiments, the λ₈₀ of the optical glass of the present application is equal to or less than 340 nm, preferably equal to or less than 335 nm, more preferably equal to or less than 330 nm, even more preferably equal to or less than 325 nm, and further preferably equal to or less than 320 nm.

In some embodiments, the λ₅ of the optical glass of the present application is equal to or less than 265 nm, preferably equal to or less than 260 nm, more preferably equal to or less than 255 nm, even more preferably equal to or less than 250 nm, and further preferably equal to or less than 245 nm.

### Density

The density (ρ) of the optical glass is measured according to the method specified in GB/T 7962.20-2010, representing the mass per unit volume at a temperature of 20 °C, in unit of g/cm³.

In some embodiments, the density (ρ) of the optical glass of the present application is equal to or less than 3.90 g/cm³, preferably equal to or less than 3.82 g/cm³, more preferably equal to or less than 3.78 g/cm³, and even more preferably equal to or less than 3.74 g/cm³.

### Transition temperature

The transition temperature (T_{g}) of the optical glass is measured according to the method specified in GB/T 7962.16-2010.

In some embodiments, the transition temperature (T_{g}) of the optical glass of the present application is equal to or less than 500 °C, preferably equal to or less than 490 °C, and more preferably equal to or less than 480 °C.

### Acid Resistance

The acid resistance (RA) (surface method) of the optical glass is measured according to the method specified in GB/T 7962.14-2010.

In some embodiments, the acid resistance (RA) of the optical glass of the present application is class 3 or higher, preferably class 2 or higher.

### Humidity Resistance

The humidity resistance (RC) (surface method) of the optical glass is measured according to the method specified in GB/T 7962.15-2010.

In some embodiments, the humidity resistance (RC) of the optical glass of the present application is class 2 or higher, preferably class 1.

### Striae quality

The glass is molded to have a size of 200 mm in width and 30 mm in thickness, and then cut into segments by scribing and breaking every 360 mm in length direction, obtaining glass blanks. Each blank has a size of width × thickness × length of 200 mm×30 mm×360 mm, which is then processed into a sample with a size of width × thickness × length of 200 mm×30 mm×80 mm. Surfaces of both ends of the sample along the length direction are polished to obtain a striae quality test sample.

The striae quality of the glass is evaluated using a striae tester composed of a point light source and a lens, inspected from the direction where striae are most visible, and compared with a standard sample. The striae quality is classified into 4 grades. See Table 1 for details.

**Table 1. The grade of striae quality**

| Grade | Striae quality |
|---|---|
| A | Under specified inspection conditions, no interior striae are visible to the naked eye, and the edge striae < 2mm |
| B | Under specified inspection conditions, no interior striae are visible to the naked eye, and the edge striae are in a range from 2 mm to 4 mm |
| C | Under specified inspection conditions, slight parallel striae are present |
| D | Under specified inspection conditions, coarse parallel striae are present |

In some embodiments, when the molding thickness of the glass is greater than 20 mm, the striae quality of the optical glass of the present application is grade C or higher, preferably grade B or higher, more preferably grade A, exhibiting excellent molding performance for the large-aperture glass.

### Crystallization Resistance

The crystallization resistance of the optical glass of the present application is tested as follows: A glass sample of 10 mm×20 mm×20 mm is placed in a semi-circular porcelain dish with a radius of 15 mm and a depth of 15 mm. The glass sample and the porcelain dish are placed into a test furnace at a temperature of T_{g}+(140 °C to 160 °C) for the first heating, with a heating time period of 15 minutes, then removed and cooled to 200 °C in a tunnel annealing furnace. Subsequently, the resulting product is subjected to the second heating in the test furnace at a stable holding temperature of T_{g}+(140 °C to 160 °C) for 15 minutes, then removed and cooled to 200 °C in the tunnel annealing furnace. After the second heating, the glass sample and the porcelain dish are placed in the tunnel annealing furnace and cooled to 200 °C, then the glass sample is removed from tunnel annealing furnace and cooled naturally to room temperature in the ambient atmosphere. After grinding and polishing the glass sample, the overall softening degree and devitrification of the glass are observed with the naked eye, and the interior of the glass is observed under a microscope to confirm the presence of crystallized particles. The crystallization resistance of the glass is evaluated according to Table 2 below, with grade A being the best and grade E being the worst.

**Table 2. Classification and evaluation criteria for crystallization resistance**

| Grade | Evaluation Criteria |
|---|---|
| A | After heating twice, at T_{g}+160 °C, the glass sample softens with no crystallized particles visible under a microscope |
| B | After heating twice, at T_{g}+160°C, the glass sample softens with crystallized particles visible to the naked eye or under a microscope |
| C | After heating twice, at T_{g}+140°C, the glass sample softens with crystallized particles visible to the naked eye or under a microscope |
| D | After heating twice, at T_{g}+140°C, the glass sample softens and exhibits devitrification |
| E | After heating twice, at T_{g}+140°C, the glass sample does not soften and exhibits devitrification |

In some embodiments, the crystallization resistance of the optical glass of the present application is grade D or higher, preferably grade C or higher, more preferably B, and further preferably grade A, exhibiting excellent thermal stability suitable for press molding for the large-aperture glass.

### Method for preparing optical glass

The optical glass of the present application is prepared as follows: The optical glass of the present application is produced using conventional raw materials and conventional processes. Raw materials such as carbonates, nitrates, sulfates, phosphates, oxides, fluorides, and metaphosphates are weighed by conventional methods. The weighed materials are introduced into a melting furnace for melting at 900 °C to 1000 °C. After clarification and sufficient homogenization, the molten glass is cast or dripped into a mold at a temperature below 800 °C to obtain the optical glass of the present invention. Those skilled in the art can appropriately select raw materials, process methods, and process parameters based on actual needs.

### Glass preform and optical element

A glass preform can be produced from the obtained optical glass by using a method such as grinding or press molding techniques, such as reheating press molding or precision press molding. Specifically, the glass preform can be formed by mechanically processing the optical glass through grinding and polishing. Alternatively, the glass preform can be formed by preparing a preform blank from the optical glass for press molding, and subjecting the preform blank to reheating press molding followed by grinding. Alternatively, the glass preform can be formed by preparing a preform blank by grinding, and subjecting the preform blank to precision press molding.

It should be noted that the methods for preparing the glass preform are not limited to the above. As described above, the optical glass of the present application is useful for various optical elements and optical designs. Preferably, the optical elements such as lenses and prisms can be prepared by forming preform blanks from the optical glass and subjecting the preform blanks to reheating press molding or precision press molding.

The glass preform and optical element of the present application are all made from the aforementioned optical glass and inherit the excellent performance of the optical glass. Examples of the lenses include various lenses with either spherical or aspherical surfaces, such as concave meniscus lenses, convex meniscus lenses, biconvex lenses, biconcave lenses, plano-convex lenses, and plano-concave lenses.

### Optical instrument

An optical element made from the optical glass of the present application can be used to manufacture an optical instrument such as a camera, an imaging device, a display device, and a surveillance device.

### Examples

### Optical Glass Examples

To further clarify and illustrate the technical solutions of the present application, the following non-limiting examples are provided.

In these examples, optical glasses with components listed in Tables 3 to 5 were obtained using the preparation method of the optical glass as described above. The performance of each glass was measured using the testing methods as described in the present application, and the results are shown in Tables 3 to 5.

**Table 3.**

| Component (mol%) | 1# | 2# | 3# | 4# | 5# | 6# | 7# | 8# |
|---|---|---|---|---|---|---|---|---|
| P⁵⁺ | 17.18 | 17.42 | 17.12 | 18.11 | 18.52 | 19.36 | 19.42 | 21.53 |
| Al³⁺ | 33.37 | 32.11 | 31.53 | 32.30 | 32.11 | 32.26 | 30.17 | 31.11 |
| Ba²⁺ | 13.94 | 14.71 | 15.99 | 15.56 | 19.94 | 14.05 | 14.03 | 12.62 |
| Sr²⁺ | 11.98 | 12.15 | 12.84 | 14.39 | 11.49 | 15.25 | 15.21 | 16.98 |
| Ca²⁺ | 18.13 | 19.54 | 19.84 | 18.08 | 15.44 | 16.20 | 16.24 | 14.89 |
| Mg²⁺ | 3.84 | 2.37 | 2.03 | 0.82 | 1.88 | 2.22 | 2.96 | 1.01 |
| La³⁺ | 0 | 0.33 | 0.21 | 0.22 | 0.09 | 0.32 | 0.32 | 0 |
| Gd³⁺ | 0.23 | 0.20 | 0.21 | 0.21 | 0.31 | 0.21 | 0.21 | 0 |
| Y³⁺ | 0.64 | 0.54 | 0.23 | 0.31 | 0.22 | 0.13 | 0.13 | 0.59 |
| Li⁺ | 0.69 | 0.63 | 0 | 0 | 0 | 0 | 0.99 | 1.17 |
| Na⁺ | 0 | 0 | 0 | 0 | 0 | 0 | 0.32 | 0 |
| K⁺ | 0 | 0 | 0 | 0 | 0 | 0 | 0 | 0 |
| Sb³⁺ | 0 | 0 | 0 | 0 | 0 | 0 | 0 | 0.10 |
| Total content of cations | 100 | 100 | 100 | 100 | 100 | 100 | 100 | 100 |
| F⁻ | 73.03 | 72.95 | 73.36 | 71.80 | 73.89 | 69.73 | 69.53 | 69.45 |
| O²⁻ | 26.87 | 26.95 | 26.54 | 28.10 | 26.01 | 30.17 | 30.37 | 30.45 |
| Cl⁻ | 0.10 | 0.10 | 0.10 | 0.10 | 0.10 | 0.10 | 0.10 | 0.10 |
| Total content of anions | 100 | 100 | 100 | 100 | 100 | 100 | 100 | 100 |
| Mg²⁺/Al³⁺ | 0.12 | 0.07 | 0.06 | 0.03 | 0.06 | 0.07 | 0.10 | 0.03 |
| (Al³⁺-Mg²⁺-Li⁺)/P⁵⁺ | 1.68 | 1.67 | 1.72 | 1.74 | 1.63 | 1.55 | 1.35 | 1.34 |
| (Ba²⁺+Sr²⁺+Ca²⁺)/Ba²⁺ | 3.16 | 3.15 | 3.04 | 3.09 | 2.35 | 3.24 | 3.24 | 3.53 |
| (Al³⁺+Mg²⁺)/Ba²⁺ | 2.67 | 2.34 | 2.10 | 2.13 | 1.70 | 2.45 | 2.36 | 2.55 |
| (45%-Al³⁺)/ (Gd³⁺+Y³⁺+La³⁺+Li⁺) | 7.46 | 7.58 | 20.72 | 17.16 | 20.79 | 19.30 | 8.99 | 7.89 |
| (45%-Al³⁺)/(15%-Mg²⁺) | 1.04 | 1.02 | 1.04 | 0.90 | 0.98 | 1.00 | 1.23 | 0.99 |
| n_{d} | 1.48063 | 1.48166 | 1.48110 | 1.48335 | 1.48776 | 1.49003 | 1.49322 | 1.49103 |
| ν_{d} | 85.99 | 85.76 | 86.31 | 85.85 | 85.01 | 83.79 | 83.51 | 82.91 |
| λ₈₀/λ₅ | 319/ 204 | 320/ 206 | 318/ 205 | 320/ 219 | 322/ 226 | 326/ 237 | 324/ 238 | 322/234 |
| ρ (g/cm³) | 3.71 | 3.74 | 3.78 | 3.76 | 3.79 | 3.74 | 3.74 | 3.67 |
| T_{g}(°C) | 468 | 469 | 481 | 479 | 476 | 476 | 452 | 471 |
| RC(S) | class 1 | class 1 | class 1 | class 1 | class 1 | class 1 | class 1 | class 1 |
| RA(S) | class 2 | class 3 | class 2 | class 2 | class 2 | class 2 | class 2 | class 2 |
| Striae quality (Grade) | B | B | A | B | B | A | A | A |
| crystallization resistance (Grade) | A | A | A | A | A | A | A | A |

**Table 4.**

| Component (mol%) | 9# | 10# | 11# | 12# | 13# | 14# | 15# |
|---|---|---|---|---|---|---|---|
| P⁵⁺ | 20.11 | 20.16 | 19.26 | 20.86 | 19.32 | 20.52 | 19.58 |
| Al³⁺ | 31.60 | 31.55 | 30.73 | 30.44 | 32.19 | 29.98 | 28.90 |
| Ba²⁺ | 14.03 | 14.10 | 12.50 | 12.65 | 12.35 | 12.47 | 13.93 |
| Sr²⁺ | 15.32 | 15.23 | 16.29 | 16.24 | 15.52 | 16.43 | 17.43 |
| Ca²⁺ | 18.29 | 17.43 | 19.03 | 17.90 | 14.11 | 18.36 | 16.47 |
| Mg²⁺ | 0 | 0 | 1.01 | 0.60 | 3.42 | 0.74 | 1.19 |
| La³⁺ | 0.55 | 0.55 | 0.33 | 0 | 0.44 | 0.12 | 0 |
| Gd³⁺ | 0 | 0 | 0.20 | 0.23 | 0.66 | 0.55 | 1.30 |
| Y³⁺ | 0 | 0 | 0.42 | 0.56 | 0.63 | 0.51 | 0 |
| Li⁺ | 0 | 0.88 | 0.23 | 0.42 | 1.26 | 0.32 | 1.20 |
| Na⁺ | 0 | 0 | 0 | 0 | 0 | 0 | 0 |
| K⁺ | 0 | 0 | 0 | 0 | 0 | 0 | 0 |
| Sb³⁺ | 0.10 | 0.10 | 0 | 0.10 | 0.10 | 0 | 0 |
| Total content of cations | 100 | 100 | 100 | 100 | 100 | 100 | 100 |
| F⁻ | 69.92 | 69.95 | 69.53 | 68.75 | 70.53 | 67.95 | 69.05 |
| O²⁻ | 29.98 | 29.95 | 30.37 | 31.15 | 29.47 | 31.95 | 30.85 |
| Cl⁻ | 0.10 | 0.10 | 0.10 | 0.10 | 0.10 | 0.10 | 0.10 |
| Total content of anions | 100 | 100 | 100 | 100 | 100 | 100 | 100 |
| Mg²⁺/Al³⁺ | 0.00 | 0.00 | 0.03 | 0.02 | 0.11 | 0.02 | 0.04 |
| (Al³⁺-Mg²⁺-Li⁺)/P⁵⁺ | 1.57 | 1.52 | 1.53 | 1.41 | 1.42 | 1.41 | 1.35 |
| (Ba²⁺+Sr²⁺+Ca²⁺)/Ba²⁺ | 3.40 | 3.32 | 3.83 | 3.70 | 3.40 | 3.79 | 3.43 |
| (Al³⁺+Mg²⁺)/Ba²⁺ | 2.25 | 2.24 | 2.54 | 2.45 | 2.88 | 2.46 | 2.16 |
| (45%-Al³⁺)/(Gd³⁺+Y³⁺+La³⁺+Li⁺) | 24.36 | 9.41 | 12.09 | 12.03 | 4.28 | 10.01 | 4.44 |
| (45%-Al³⁺)/(15%-Mg²⁺) | 0.89 | 0.90 | 1.02 | 1.01 | 1.11 | 1.05 | 1.17 |
| n_{d} | 1.48860 | 1.48955 | 1.48946 | 1.48833 | 1.48635 | 1.48921 | 1.48976 |
| ν_{d} | 84.43 | 84.11 | 84.19 | 83.31 | 83.56 | 84.23 | 84.18 |
| λ₁₈₀/λ₅ | 323/ 218 | 323/ 234 | 320/ 229 | 318/ 215 | 320/ 219 | 326/ 230 | 322/226 |
| ρ(g/cm³) | 3.69 | 3.67 | 3.74 | 3.66 | 3.69 | 3.74 | 3.66 |
| T_{g}(°C) | 474 | 462 | 461 | 469 | 458 | 476 | 464 |
| RC(S) | Class 1 | Class 1 | Class 1 | Class 1 | Class 1 | Class 1 | Class 1 |
| RA(S) | Class 3 | Class 2 | Class 3 | Class 2 | Class 2 | Class 3 | Class 2 |
| Striae quality (Grade) | A | B | A | A | C | A | C |
| crystallization resistance (Grade) | A | A | A | A | A | A | A |

**Table 5.**

| Component (mol%) | 16# | 17# | 18# | 19# | 20# | 21# | 22# |
|---|---|---|---|---|---|---|---|
| P⁵⁺ | 15.25 | 15.94 | 16.18 | 16.68 | 19.75 | 19.71 | 21.11 |
| Al³⁺ | 24.56 | 23.18 | 33.39 | 32.89 | 32.06 | 31.98 | 24.53 |
| Ba²⁺ | 13.72 | 13.89 | 13.56 | 14.08 | 12.81 | 12.62 | 20.53 |
| Sr²⁺ | 17.96 | 18.07 | 14.98 | 14.97 | 15.82 | 16.01 | 16.37 |
| Ca²⁺ | 19.11 | 18.87 | 16.12 | 16.13 | 16.13 | 16.13 | 15.46 |
| Mg²⁺ | 8.42 | 8.41 | 3.84 | 3.84 | 0.34 | 1.87 | 0 |
| La³⁺ | 0 | 0.20 | 0.17 | 0.13 | 0 | 0 | 0.27 |
| Gd³⁺ | 0.35 | 0.65 | 0.43 | 0.57 | 2.30 | 0 | 0.52 |
| Y³⁺ | 0.63 | 0.69 | 0.64 | 0.12 | 0.69 | 0.54 | 1.21 |
| Li⁺ | 0 | 0 | 0.69 | 0.59 | 0 | 1.04 | 0 |
| Na⁺ | 0 | 0 | 0 | 0 | 0 | 0 | 0 |
| K⁺ | 0 | 0 | 0 | 0 | 0 | 0 | 0 |
| Sb³⁺ | 0 | 0.10 | 0 | 0 | 0.10 | 0.10 | 0 |
| Total content of cations | 100 | 100 | 100 | 100 | 100 | 100 | 100 |
| F⁻ | 74.93 | 73.36 | 73.53 | 73.03 | 69.39 | 69.45 | 67.29 |
| O²⁻ | 24.97 | 26.54 | 26.37 | 26.87 | 30.51 | 30.45 | 32.61 |
| Cl⁻ | 0.10 | 0.10 | 0.10 | 0.10 | 0.10 | 0.10 | 0.10 |
| Total content of anions | 100 | 100 | 100 | 100 | 100 | 100 | 100 |
| Mg²⁺/Al³⁺ | 0.34 | 0.36 | 0.12 | 0.12 | 0.01 | 0.06 | 0.00 |
| (Al³⁺-Mg²⁺-Li⁺)/P⁵⁺ | 1.06 | 0.93 | 1.78 | 1.71 | 1.61 | 1.47 | 1.16 |
| (Ba²⁺+Sr²⁺+Ca²⁺)/Ba²⁺ | 3.70 | 3.66 | 3.29 | 3.21 | 3.49 | 3.55 | 2.55 |
| (Al³⁺+Mg²⁺)/Ba²⁺ | 2.40 | 2.27 | 2.75 | 2.61 | 2.53 | 2.68 | 1.19 |
| (45%-Al³⁺)/(Gd³⁺+Y³⁺+La³⁺+Li⁺) | 20.86 | 14.17 | 6.02 | 8.59 | 4.33 | 8.24 | 10.24 |
| (45%-Al³⁺)/(15%-Mg²⁺) | 3.11 | 3.31 | 1.04 | 1.09 | 0.88 | 0.99 | 1.36 |
| n_{d} | 1.48160 | 1.48871 | 1.47439 | 1.47953 | 1.48664 | 1.48635 | 1.49591 |
| ν_{d} | 85.33 | 84.53 | 87.34 | 86.1 | 85.53 | 83.56 | 82.94 |
| λ₈₀/λ₅ | 324/ 206 | 323/ 224 | 319/ 204 | 320/ 206 | 318/ 225 | 320/ 223 | 329/237 |
| ρ(g/cm³) | 3.82 | 3.81 | 3.74 | 3.73 | 3.71 | 3.70 | 3.73 |
| T_{g}(°C) | 464 | 463 | 469 | 461 | 483 | 465 | 451 |
| RC(S) | Class 1 | Class 1 | Class 1 | Class 1 | Class 1 | Class 1 | Class 1 |
| RA(S) | Class 3 | Class 3 | Class 2 | Class 2 | Class 2 | Class 2 | Class 2 |
| Striae quality (Grade) | A | A | B | A | B | A | C |
| crystallization resistance (Grade) | C | C | A | A | A | A | A |

### Glass Preform Examples

The optical glasses obtained in Examples 1# to 22# were processed using methods such as grinding or press molding techniques, such as reheating press molding or precision press molding, to produce various preforms. The preforms were prisms or lenses such as concave meniscus lenses, convex meniscus lenses, biconvex lenses, biconcave lenses, plano-convex lenses, and plano-concave lenses. Under conventional press molding processes, the molded products exhibited no crystallized particles, significantly improving press molding efficiency and product yield.

### Optical Element Examples

The preforms obtained in the above glass preform examples can be annealed to reduce internal stress in the glass and slightly adjust the refractive index, allowing the optical performance such as the refractive index to achieve the desired values.

Subsequently, the preforms can be subjected to grinding and polishing to obtain prisms or lenses including concave meniscus lenses, convex meniscus lenses, biconvex lenses, biconcave lenses, plano-convex lenses, and plano-concave lenses. The surfaces of the resulting optical elements can be coated with anti-reflection films.

The optical glasses obtained in Examples 1# to 22# can be cut into predetermined sizes, and the resulting blanks can be subjected to optical cold-working processes such as grinding and polishing to obtain large-aperture, high-quality optical elements. The surfaces of the resulting optical elements can be coated with anti-reflection films.

### Optical Instrument Examples

By optical designs, one or more of the optical elements prepared in the above optical element examples can be used to form optical parts or assemblies, which can be applied in imaging devices, sensors, microscopes, medical technology, digital projection, communication, optical communication technology/information transmission, automotive optics/lighting, lithography, excimer lasers, wafers, computer chips, and integrated circuits and electronic devices including such wafers and chips.

## Claims

1. An optical glass, comprising following components by mole percentage:
cationic components comprising: P⁵⁺: 7% to 27%, Al³⁺: 10% to 45%, Ba²⁺: 5% to 25%, Sr²⁺: 5% to 25%, and Ca²⁺: 5% to 30%; and
anionic components comprising: F⁻: 50% to 90%, and O²⁻: 10% to 50%.

2. The optical glass according to claim 1, wherein by mole percentage, the cationic components further comprise: Mg²⁺: 0 to 15%, and/or Y³⁺: 0 to 10%, and/or La³⁺: 0 to 10%, and/or Gd³⁺: 0 to 10%, and/or R⁺: 0 to 10%, and/or Sb³⁺: 0 to 1%, wherein R⁺ is one or more selected from the group consisting of Li⁺, Na⁺, and K⁺; and
the anionic components further comprise: Cl⁻: 0 to 1%.

3. The optical glass according to claim 2, wherein, by mole percentage, the cationic components consist of: P⁵⁺: 7% to 27%, Al³⁺: 10% to 45%, Ba²⁺: 5% to 25%, Sr²⁺: 5% to 25%, Ca²⁺: 5% to 30%, Mg²⁺: 0 to 15%, Y³⁺: 0 to 10%, La³⁺: 0 to 10%, Gd³⁺: 0 to 10%, R⁺: 0 to 10%, and Sb³⁺: 0 to 1%, wherein R⁺ is one or more selected from the group consisting of Li⁺, Na⁺, and K⁺; and
the anionic components consist of: F⁻: 50% to 90%, O²⁻: 10% to 50%, and Cl⁻: 0 to 1%.

4. The optical glass according to any one of claims 1 to 3, wherein by mole percentage, the components satisfy one or more of following six conditions:
1) (Ba²⁺+Sr²⁺+Ca²⁺)/Ba²⁺ is in a range from 2.0 to 4.6;
2) (45%-Al³⁺)/(15%-Mg²⁺) is in a range from 0.3 to 5.0;
3) (Al³⁺+Mg²⁺)/Ba²⁺ is in a range from 1.5 to 3.5;
4) (45%-Al³⁺)/(Gd³⁺+Y³⁺+La³⁺+Li⁺) is in a range from 2.0 to 80.0;
5) Mg²⁺/Al³⁺ is in a range from 0 to 0.5;
6) (Al³⁺-Mg²⁺-Li⁺)/P⁵⁺ is in a range from 0.5 to 2.5.

5. The optical glass according to any one of claims 1 to 3, wherein by mole percentage, the components satisfy one or more of following six conditions:
1) (Ba²⁺+Sr²⁺+Ca²⁺)/Ba²⁺ is in a range from 2.5 to 4.1;
2) (45%-Al³⁺)/(15%-Mg²⁺) is in a range from 0.5 to 3.0;
3) (Al³⁺+Mg²⁺)/Ba²⁺ is in a range from 2.0 to 3.0;
4) (45%-Al³⁺)/(Gd³⁺+Y³⁺+La³⁺+Li⁺) is in a range from 6.0 to 50.0;
5) Mg²⁺/Al³⁺ is in a range from 0 to 0.3;
6) (Al³⁺-Mg²⁺-Li⁺)/P⁵⁺ is in a range from 1.0 to 2.3.

6. The optical glass according to any one of claims 1 to 3, wherein by mole percentage, the components satisfy one or more of following six conditions:
1) (Ba²⁺+Sr²⁺+Ca²⁺)/Ba²⁺ is in a range from 3.0 to 3.9;
2) (45%-Al³⁺)/(15%-Mg²⁺) is in a range from 0.6 to 2.0;
3) (Al³⁺+Mg²⁺)/Ba²⁺ is in a range from 2.3 to 2.7;
4) (45%-Al³⁺)/(Gd³⁺+Y³⁺+La³⁺+Li⁺) is in a range from 8.0 to 35.0;
5) Mg²⁺/Al³⁺ is in a range from 0 to 0.1;
6) (Al³⁺-Mg²⁺-Li⁺)/P⁵⁺ is in a range from 1.3 to 2.1.

7. The optical glass according to any one of claims 1 to 3, wherein by mole percentage, the components comprise: P⁵⁺: 11% to 24%, and/or Al³⁺: 18% to 40%, and/or Ba²⁺: 9% to 21%, and/or Sr²⁺: 8% to 21%, and/or Ca²⁺: 10% to 25%, and/or Mg²⁺: 0 to 10%, and/or Y³⁺: 0 to 5%, and/or La³⁺: 0 to 5%, and/or Gd³⁺: 0 to 5%, and/or R⁺: 0 to 3%, and/or Sb³⁺: 0 to 0.5%, wherein R⁺ is one or more selected from the group consisting of Li⁺, Na⁺, and K⁺.

8. The optical glass according to any one of claims 1 to 3, wherein by mole percentage, the components comprise: P⁵⁺: 15% to 20%, and/or Al³⁺: 24% to 35%, and/or Ba²⁺: 12% to 19%, and/or Sr²⁺: 11% to 17%, and/or Ca²⁺: 15% to 20%, and/or Mg²⁺: 0 to 5%, and/or Y³⁺: 0 to 3%, and/or La³⁺: 0 to 2%, and/or Gd³⁺: 0 to 3%, and/or without R⁺, and/or Sb³⁺: 0 to 0.3%, wherein R⁺ is one or more selected from the group consisting of Li⁺, Na⁺, and K⁺.

9. The optical glass according to any one of claims 1 to 3, wherein by mole percentage, the components comprise: F⁻: 60% to 80%, and/or O²⁻: 20% to 40%, and/or Cl⁻: 0 to 0.5%.

10. The optical glass according to any one of claims 1 to 4, wherein by mole percentage, the components comprise: F⁻: 67% to 75%, and/or O²⁻: 25% to 33%, and/or Cl⁻: 0 to 0.3%.

11. The optical glass according to any one of claims 1 to 3, wherein the optical glass has a refractive index n_{d} being in a range from 1.46 to 1.52, and/or an Abbe number ν_{d} being in a range from 81 to 89, and/or λ₈₀≤335 nm, and/or λ₅≤260 nm, and/or a density ρ≤3.90 g/cm³, and/or a transition temperature T_{g}≤500 °C, and/or an acid resistance RA being class 3 or higher, and/or a humidity resistance RC being class 2 or higher, and/or a striae quality being grade C or higher, and/or a crystallization resistance being grade C or higher.

12. The optical glass according to any one of claims 1 to 3, wherein the optical glass has a refractive index n_{d} being in a range from 1.48 to 1.50, and/or an Abbe number ν_{d} being in a range from 84 to 87, and/or λ₈₀≤320 nm, and/or λ₅≤245 nm, and/or a density ρ≤3.74 g/cm³, and/or a transition temperature T_{g}≤480 °C, and/or an acid resistance RA being class 2 or higher, and/or a humidity resistance RC being class 1, and/or a striae quality being grade A, and/or a crystallization resistance being grade A.

13. A glass preform made of the optical glass according to any one of claims 1 to 12.

14. An optical element made of the optical glass according to any one of claims 1 to 12 or made from the glass preform according to claim 13.

15. An optical instrument comprising the optical glass according to any one of claims 1 to 12 and/or the optical element according to claim 14.
